(19) Europäisches Patentamt
European Patent Office
Office européen des brevets

(11) **EP 0 751 634 A2**

(12) **EUROPÄISCHE PATENTANMELDUNG**

(43) Veröffentlichungstag:
**02.01.1997 Patentblatt 1997/01**

(51) Int. Cl.⁶: **H04B 7/26**, **H04J 3/06**

(21) Anmeldenummer: 96109652.6

(22) Anmeldetag: **15.06.1996**

(84) Benannte Vertragsstaaten:
**AT BE CH DE ES FR GB IT LI NL SE**

(30) Priorität: **28.06.1995 DE 19523489**

(71) Anmelder: **Alcatel SEL Aktiengesellschaft**
**D-70435 Stuttgart (DE)**

(72) Erfinder: **Gontsch, Heinz**
**75223 Niefern (DE)**

(74) Vertreter: **Müller, Joachim, Dipl.-Ing. et al**
**Alcatel Alsthom**
**Intellectual Property Department,**
**Postfach 30 09 29**
**70449 Stuttgart (DE)**

(54) **Verfahren und Schaltungsanordnung zur Synchronisation von Impulsrahmen in multizellularen Telekommunikationsanlagen**

(57)    Telekommunikationsanlagen werden oftmals durch Zusammenschaltung gleichartiger Teilanlagen gebildet, um die Anlagen an unterschiedliche Teilnehmerzahlen anpassen zu können. Bei einer derartigen Struktur muß die Forderung erfüllt sein, daß ein Teilnehmer mit einem schnurlosen Endgerät sich innerhalb des von der Telekommunikationsanlage versorgten Gebietes ohne Gesprächsunterbrechung frei bewegen kann, unabhängig davon, von welcher Teilanlage seine Funkzelle gerade versorgt wird. Für den unterbrechungslosen Zellenwechsel ist eine Rahmensynchronisation der digitalen Informationen erforderlich. Durch Messung der Zeitdifferenz ($\Delta t2$) zwischen Rahmensynchronisierimpuls (FR1) einer Teilanlage und dem von der benachbarten Teilanlage wiedergewonnen Rahmensynchronisierimpuls (RFR2) wird unter Berücksichtigung der Signallaufzeit ($\Delta T$) zwischen den Teilanlagen eine Verzögerungszeit derart berechnet, daß ein beliebiger Versatz der Impulsrahmen ausgeglichen wird. Das Verfahren ist in nach dem DECT-Standard arbeitenden Anlagen einsetzbar.

Fig.2

**Beschreibung**

Die Erfindung betrifft ein Verfahren und eine Schaltungsanordnung zur Synchronisation von Impulsrahmen bei der Übertragung von digitalen Informationen in einem Telekommunikationsnetz, das aus mehreren, oftmals örtlich voneinander abgesetzten Telekommunikationsanlagen besteht. Bei derartigen Netzen ist es allgemein bekannt, abgesetzte Anlagen von einer Hauptanlage mit den erforderlichen Taktsignalen zu versorgen, so daß innerhalb eines Telekommunikationsnetzes die einzelnen Anlagen taktsynchron arbeiten. Dabei ist ein zeitlicher Versatz der Takte, hervorgerufen durch Signallaufzeiten längs der Übertragungsleitungen und der unterschiedlichen Übertragungsvierpole, in den einzelnen Anlagen ohne Belang, wenn zu jeder Anlage drahtgebundene Endgeräte gehören. Es sind aber auch Telekommunikationssysteme bekannt, die durch kleinere, gekoppelte Teilanlagen realisiert werden, vgl. Siegmund, G.: Eine neue Generation von Telekommunikationsanlagen, ntz Bd. 47 (1994) Heft 3, Seiten 158 bis 164. Je nach Bedarf kann jede Teilanlage mit unterschiedlichen Schnittstellenschaltungen ausgestattet werden, beispielsweise mit Schnittstellenschaltungen für drahtgebundene Endgeräte als auch mit einer Schnittstellenschaltung zum Anschluß von Basisstationen zur Bildung einer Mehrzelleninfrastruktur nach dem DECT-Standard, so daß schnurlose Telefone Zugriff zu einer so ausgestatteten Teilanlage haben. Größere Netzkonfigurationen werden durch Kopplung mehrerer Teilanlagen gebildet. Jede Teilanlage enthält eine bestimmte Anzahl von Baugruppen, so daß die Anzahl der Anschlußmöglichkeiten von Basisstationen bei jeder Teilanlage begrenzt ist. Auch bei einer derartigen Struktur einer Telekommunikationsanlage muß die Forderung erfüllt sein, daß ein Teilnehmer mit einem schnurlosen Endgerät sich innerhalb des von der Telekommunikationsanlage versorgten Gebiets ohne Gesprächsunterbrechung frei bewegen kann, und zwar unabhängig davon, von welcher Teilanlage seine Funkzelle gerade versorgt wird.

Aus dieser Forderung resultiert die Aufgabe, eine Synchronisation der Impulsrahmen aller Teilanlagen zu erreichen, um einen unterbrechungslosen Zellenwechsel bei einem Übergang von einer ersten zu einer zweiten Teilanlage zu sichern, unabhängig davon, ob die Teilanlagen unmittelbar miteinander verbunden sind oder über Festverbindungen als örtlich abgesetzte Teilanlagen angeordnet sind.

Diese Aufgabe wird durch das im ersten Patentanspruch angegebene Verfahren und durch die im dritten Patentanspruch angegebene Schaltungsanordnung gelöst.

Durch das erfindungsgemäße Verfahren, das mit einer einfachen Schaltungsanordnung realisierbar ist, werden sowohl der zeitliche Versatz der Impulsrahmen in unterschiedlichen Teilanlagen als auch die Signallaufzeiten von einer Teilanlage zur benachbarten Teilanlage ausgeglichen. Mit dem Verfahren ist es auch möglich, eine Multirahmensynchronisation vorzunehmen, wie sie bei der Übertragung von verschlüsselten Daten erforderlich ist.

Die Erfindung wird nachstehend an einem Ausführungsbeispiel erläutert. In der dazugehörigen Zeichnung zeigen

Fig. 1 ein Schaltbild für die Zusammenschaltung zweier Teilanlagen,

Fig. 2 ein erstes Impulsdiagramm mit Rahmensynchronisierimpulsen zweier Teilanlagen,

Fig. 3 ein zweites Impulsdiagramm mit Rahmensynchronisierimpulsen zweier Teilanlagen,

Fig. 4 ein Schaltbild einer Schaltungsanordnung für den Vergleich zweier Rahmensynchronisierimpulse,

Fig. 5 ein Schaltbild einer Schaltungsanordnung für die Verzögerung eines Rahmensynchronisierimpulses und

Fig. 6 ein Schaltbild einer Telekommunikatonsanlage aus fünf Teilanlagen.

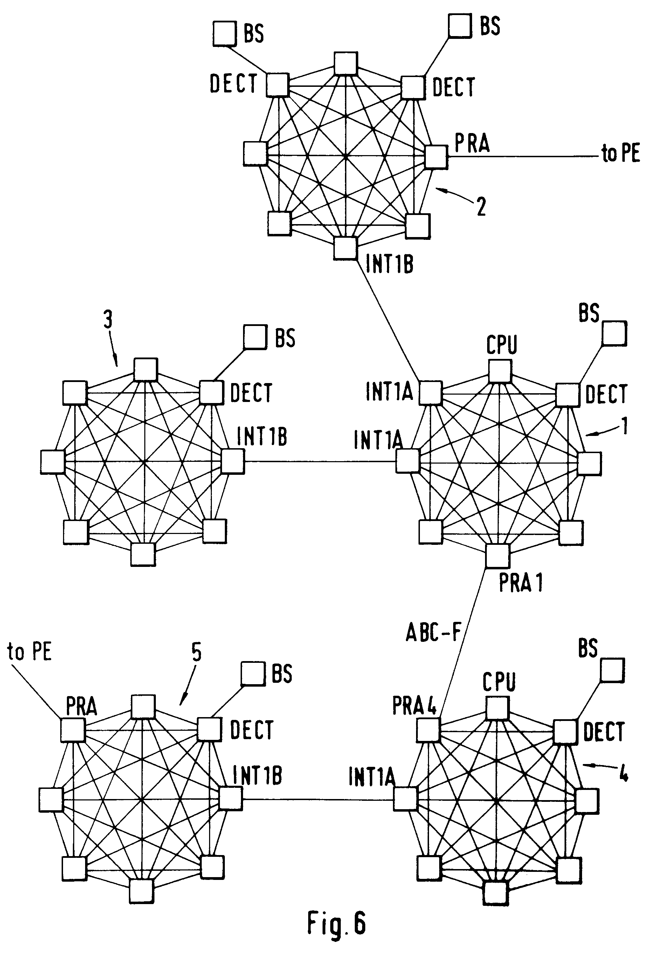

Um Telekommunikationsanlagen, kurz TK-Anlagen, für eine unterschiedliche Anzahl Teilnehmeranschlüsse zu realisieren, werden verschiedene Ausbaustufen der TK-Anlagen in modularer Form aus gleichartig gestalteten Teilanlagen aufgebaut, vgl. Fig. 6.

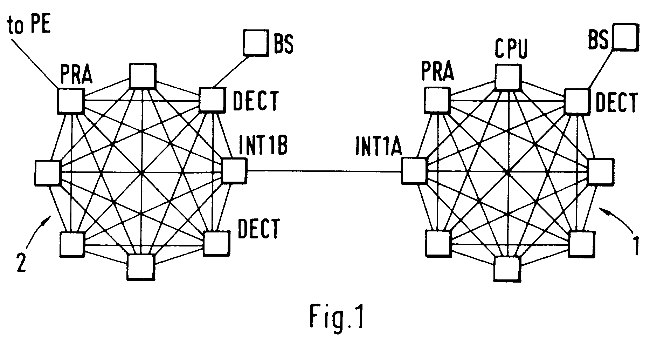

In Fig. 1 ist eine TK-Anlage aus einer ersten Teilanlage 1 und einer zweiten Teilanlage 2 dargestellt. Jede Teilanlage enthält eine bestimmte Anzahl von peripheren Baugruppen, die in Form einer vollständigen Masche untereinander verbunden sind und die unterschiedliche Schnittstellenschaltungen enthalten. Näher bezeichnet sind die peripheren Baugruppen, die für die Erklärung der Wirkungsweise der Erfindung erforderlich sind. Die erste Teilanlage 1 enthält eine Schnittstellenschaltung DECT, an die eine Basisstation BS für den Zugriff schnurloser Endgeräte vorgesehen ist, weiterhin einen Primärmultiplexanschluß PRA für den Zugang zum öffentlichen Netz, eine erste Schnittstellenschaltung INT1A für die Verbindung der Teilanlagen untereinander und eine Zentralsteuereinheit CPU, die nur in der ersten Teilanlage 1, der sogenannten Masteranlage, vorhanden ist und sowohl die Steuervorgänge der Teilanlage 1 als auch der zweiten Teilanlage 2 unterstützt. Die zweite Teilanlage 2 enthält eine Schnittstellenschaltung DECT mit Basisistation BS, einen Primärmultiplexanschluß PRA für den Zugang zum öffentlichen Netz PE und eine zweite Schnittstellenschaltung INT1B.

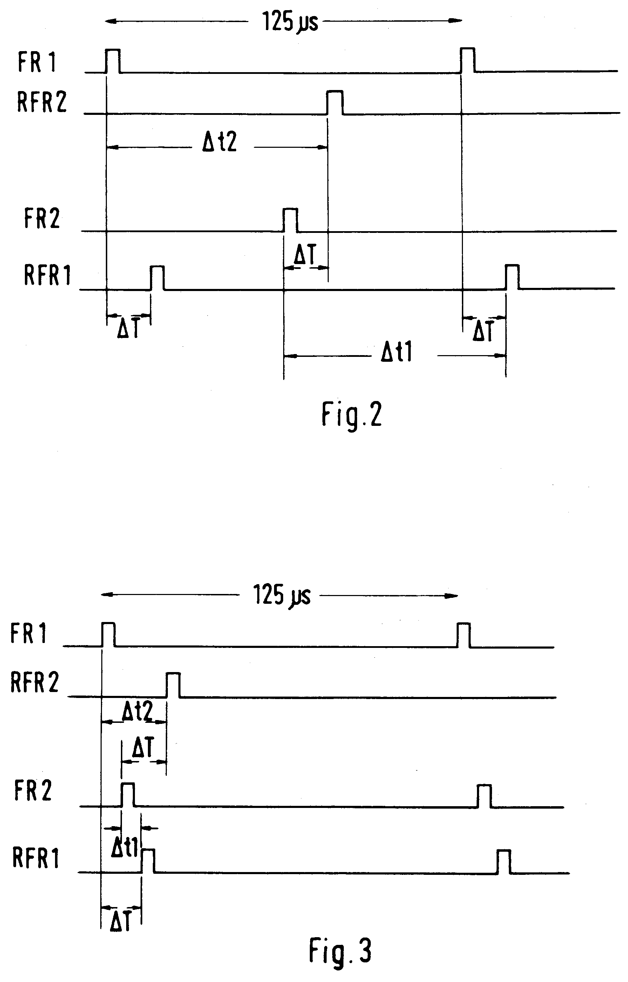

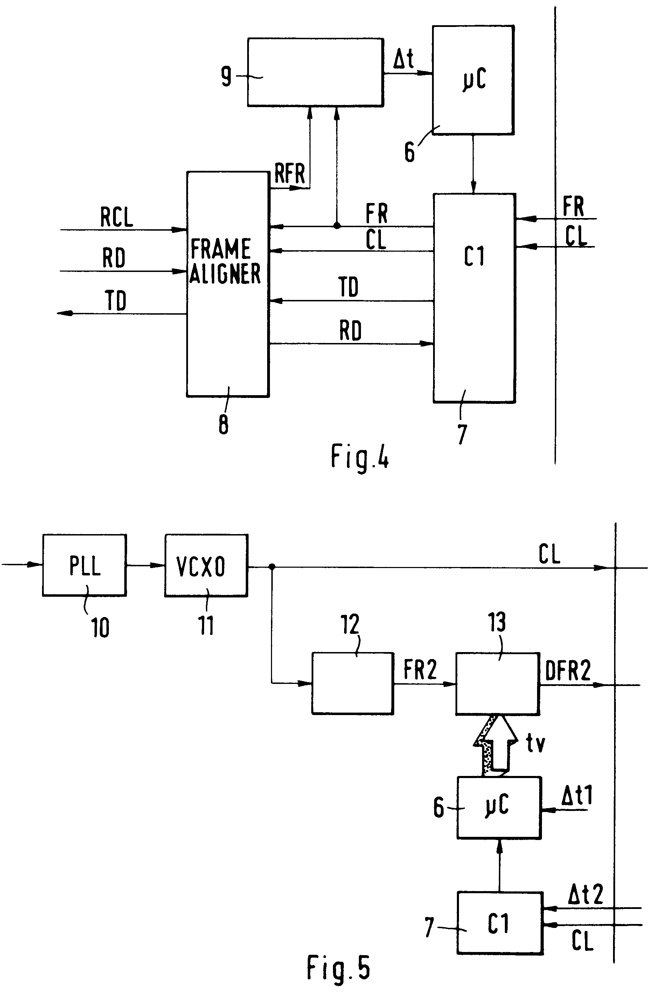

Die Taktversorgung der ersten Teilanlage 1 erfolgt von dem Taktgenerator der Zentralsteuereinheit CPU, und die Taktversorgung der zweiten Teilanlage 2 erfolgt vom öffentlichen Netz PE. Dabei besteht zwar Synchronismus der Takte untereinander, Fig. 2 und Fig. 3 zeigen jedoch, daß der erste Rahmensynchronisierimpuls FR1 der ersten Teilanlage 1 und der zweite Rahmensynchronisierimpuls FR2 der zweiten Teilanlage 2 zeitlich zueinander eine beliebige Lage haben können. Auf Grund der Signallaufzeit, deren Größe von der Länge der Verbindungsleitung zwischen erster Schnittstellenschaltung INT1A und zweiter Schnittstellenschaltung INT1B abhängig ist, ergibt sich eine Verzögerungszeit $\Delta T$ zwischen dem ersten Rahmensynchronisierimpuls FR1 und dem in der zweiten Teilanlage 2 wiedergewonnenen ersten Rahmensynchronisierimpuls RFR1. Die gleiche Verzögerungszeit $\Delta T$ tritt auf zwischen dem zweiten Rahmensynchronisierimpuls FR2 und dem in der ersten Teilanlage 1 wiedergewonnenen zweiten Rahmensynchronisierimpuls RFR2. In der ersten Teilanlage 1 wird nun eine erste Zeitdifferenz $\Delta t2$ zwischen dem ersten Rahmensynchronisierimpuls FR1 und dem wiedergewonnenen zweiten Rahmensynchronisierimpuls RFR2 mit einer in Fig. 4 dargestellten Schaltungsanordnung gemessen, die in der ersten Schnittstellenschaltung INT1A enthalten ist. Ebenso wird eine zweite Zeitdifferenz $\Delta t1$ zwischen dem zweiten Rahmensynchronisierimpuls FR2 und dem wiedergewonnenen ersten Rahmensynchronisierimpuls RFR1 mit der in Fig. 4 dargestellten Schaltungsanordnung gemessen, die auch in der zweiten Schnittstellenschaltung INT1B enthalten ist. Die erste Zeitdifferenz $\Delta t2$ und die zweite Zeitdifferenz $\Delta t1$ werden in Stufen von 0 ... 255 mit einem 2-MHz-Takt jeweils von einem Mikrorechner 6, siehe Fig. 4, gemessen. Die erste Zeitdifferenz $\Delta t2$ wird dann, gesteuert von der Zentralsteuereinheit CPU, zu der zweiten Schnittstellenschaltung INT1B übertragen, so daß dann dort die erste Zeitdifferenz $\Delta t1$ und die zweite Zeitdifferenz $\Delta t2$ zur Weiterverarbeitung vorliegen. Für den Fall, daß die Rahmensynchronisierimpulse FR1, FR2 im 8-kHz-Takt auftreten, ist aus Fig. 2 zu entnehmen

$$\Delta t2 - \Delta T + \Delta t1 - \Delta T = 125 \ \mu s \qquad (1)$$

$$\Delta t1 + \Delta t2 = 2\Delta T + 125 \ \mu s$$

In Fig. 3 ist das Impulsdiagramm für den Fall $\Delta t1 < \Delta T$ dargestellt. In diesem Fall ergibt sich

$$\Delta t2 = \Delta T - \Delta t1 + \Delta T$$

$$\Delta t1 + \Delta t2 = 2\Delta T$$

Somit ist aus der ersten Zeitdifferenz $\Delta t2$ und der zweiten Zeitdifferenz $\Delta t1$ die Verzögerungszeit $\Delta T$ gemäß der Gleichungen (1) und (2) von dem Mikrorechner 6, siehe Fig. 5, ermittelbar. Um Rahmensynchronismus zwischen dem ersten Rahmensynchronisierimpuls FR1 und dem zweiten Rahmensynchronisierimpuls FR2 zu erreichen, wird der zweite Rahmensynchronisierimpuls FR2 um die Zeit $tv = \Delta t1 - \Delta T$ verzögert. Die Verzögerung wird von der der zweiten Schnittstellenschaltung INT1B zugeordneten Schaltungsanordnung, die in Fig. 5 dargestellt ist, bewirkt. Mit dem erfindungsgemäßen Verfahren wird vorteilhafterweise erreicht, daß bei der Verzögerungszeit tv die Signallaufzeit $\Delta T$ zwischen den Teilanlagen berücksichtigt wird, so daß der Rahmensynchronismus unabhängig von der Leitungslänge zwischen den einzelnen Teilanlagen hergestellt wird.

Fig. 4 zeigt einen Ausschnitt der Schaltungsanordnung der ersten und der zweiten Schnittstellenschaltung INT1A, INT1B. Diese Schaltungsanordnung besteht aus einem Mikrorechner 6, einem speziellen kundensprezifischen C1-Schnittstellenbaustein 7, einem Frame Aligner 8 und einem Komparator 9. Jede periphere Schnittstellenschaltung einer Teilanlage enthält einen C1-Schnittstellenbaustein 7, der den Zugang zu den Verbindungen der Schnittstellen in einer Teilanlage verwaltet und der von dem Mikrorechner 6 gesteuert wird. Der Frame Aligner 8 bewirkt die Zuordnung der eigenen Taktimpulse CL, der wiedergewonnenen Taktimpulse RCL, der eingenen Rahmensynchroniserimpulse FR und der wiedergewonnenen Rahmensynchroniserimpulse RFR zu den empfangenen Daten RD und den gesendeten Daten TD. Mit dem Komparator 9 wird die Zeitdifferenz $\Delta t$ zwischen dem Rahmensynchronisierimpuls FR und dem wiedergewonnenen Rahmensynchronisierimpuls RFR gemessen, und zwar in der ersten Teilanlage 1 mit der ersten Schnittstellenschaltung INT1A die erste Zeitdifferenz $\Delta t2$ und in der zweiten Teilanlage 2 mit der zweiten Schnittstellenschaltung INT1B die zweite Zeitdifferenz $\Delta t1$. Der Komparator 9 besteht aus einem 8-bit-Zähler, der mit dem Rahmensynchronisierimpuls FR beispielsweise der ersten Teilanlage 1 gestartet wird. Der 8-bit-Zähler zählt solange, bis ein beispielsweise von der zweiten Teilanlage 2 wiedergewonnener Rahmensynchronisierimpuls RFR empfangen wird. Mit diesem wiedergewonnenen Rahmensynchronisierimpuls RFR wird der Zähler gestoppt, der Zählerstand wird in einen Speicher geschrieben und von dem Mikrorechner 6 ausgelesen. Die erste Zeitdifferenz $\Delta t2$ wird, gesteuert von der Zentralsteuerung CPU der ersten Teilanlage 1, zu der zweiten Schnittstellenschaltung INT1B der zweiten Teilanlage 2 übertragen.

Die in Fig. 5 dargestellte Schaltungsanordnung zur Verzögerung der Rahmensynchronisierimpulse ist nur in den von der ersten, der Masteranlage 1 gesteuerten Teilanlagen vorhanden. Die Schaltungsanordnung besteht aus dem zuvor genannten Mikrorechner 6 und dem C1-Schnittstellenbaustein 7 sowie aus einem Phasenregelkreis 10, einem spannungsgesteuerten Oszillator 11, einem Baustein zur Taktaufbereitung 12 und einer Verzögerungsschaltung 13. Der spannungsgesteuerte Oszillator 11 bildet in Verbindung mit dem Phasenregelkreis 10 einen Taktgenerator, der den Grundtakt CL erzeugt, aus dem mit dem Baustein zur Taktaufbereitung 12 der zweite Rahmensynchronisierimpuls FR2 der zweiten Teilanlage 2 abgeleitet wird. Weiterhin stehen die erste Zeitdifferenz $\Delta t2$ der ersten

Teilanlage 1 und die zweite Zeitdifferenz Δt1 der zweiten Teilanlage 2 zur Verfügung, aus denen mit dem Mikrorechner 6 gemäß der Gleichungen (1) und (2) die Verzögerungszeit tv berechnet wird, mit der der zweite Rahmensynchronisierimpuls FR2 verzögert wird. Der digitale Wert der Verzögerungszeit tv wird in der Verzögerungsschaltung 13 in einem Register gespeichert, dem ein Zähler nachgeschaltet ist. Die Verzögerungsschaltung 13 wird von dem zweiten Rahmensynchronisierimpuls FR2 initialisiert, der Zähler wird gestartet und gibt nach Ablauf der Verzögerungszeit tv den verzögerten zweiten Rahmensynchronisierimpuls DFR2 zur Weiterverarbeitung aus.

Fig. 6 zeigt die Struktur einer größeren TK-Anlage, die aus mehreren Teilanlagen besteht und bei der die Voraussetzungen für einen unterbrechungslosen Zellenwechsel für schnurlose Endgeräte erfüllt sein müssen. Die erste Teilanlage 1 mit einer Zentralsteuereinheit CPU bildet mit der zweiten Teilanlage 2 und einer dritten Teilanlage 3 eine sogenannte Cluster-Konfiguration. Eine damit vergleichbare Struktur bildet eine vierte Teilanlage 4 mit einer Zentralsteuereinheit CPU und eine fünfte Teilanlage 5. Derartige Cluster-Konfigurationen können über Festverbindungen ABC-F als abgesetzte Anlagenteile zu einer Gesamtanlage zusammengeschaltet werden. Für einen Teilnehmer ist dabei nicht zu unterscheiden, an welche Teilanlage er angeschaltet ist. Der Vorgang der Rahmensynchronisation erfolgt beginnend bei der ersten Teilanlage 1 von Teilanlage zu Teilanlage nach dem zuvor beschriebenen Verfahren. Bei der Rahmensynchronisation zwischen erster Teilanlage 1 und vierter Teilanlage 4 wird einer von beiden die Masterfunktion durch die Systemsoftware zugeteilt, beispielsweise wird die erste Teilanlage 1 als Masteranlage definiert. Damit ist zunächst die Rahmensynchronisation der ersten, der zweiten und der dritten Teilanlage 1, 2, 3, gesteuert von der ersten Teilanlage 1, gewährleistet.

Gleichzeitig oder nach dem Synchronisationsvorgang der ersten, zweiten und dritten Teilanlage 1, 2, 3 wird die Rahmensynchronisation der ersten Teilanlage 1 mit der vierten Teilanlage 4 vorgenommen. Der Signalaustausch erfolgt dazu über eine Festverbindung ABC-F, die einen Primärmultiplexanschluß PRA1 der ersten Teilanlage 1 mit einem Primärmultiplexanschluß PRA4 der vierten Teilanlage 4 verbindet. Entsprechend des zuvor beschriebenen Verfahrens für zwei Teilanlagen gemäß Fig. 1 führt der Primärmultiplexanschluß PRA1 der ersten Teilanlage 1 die gleichen Funktionen aus wie die erste Schnittstellenschaltung INT1A, mit der die erste Zeitdifferenz Δt2 gemessen wird, und der Primärmultiplexanschluß PRA4 der vierten Teilanlage 4 führt die gleichen Funktionen aus wie die zweite Schnittstellenschaltung INT1B, mit der die zweite Zeitdifferenz Δt1 gemessen wird. Von dem Primärmultiplexanschluß PRA1 der ersten Teilanlage 1 wird, gesteuert durch die Zentralsteuerung CPU der ersten Teilanlage 1 und durch die Zentralsteuerung CPU der vierten Teilanlage 4 die erste Zeitdifferenz Δt2 zu der Schaltung zur Verzögerung der Rahmensynchronisierimpulse, die Teil der Zentralsteuerung CPU der vierten Teilanlage 4 ist und deren Aufbau in Fig. 5 dargestellt ist, übertragen. Von dem Primärmultiplexanschluß PRA4 der vierten Teilanlage 4 wird die zweite Zeitdifferenz Δt1 über die Zentralsteuerung CPU der vierten Teilanlage 4 ebenfalls zu der Schaltung zur Verzögerung der Rahmensynchronisierimpulse übertragen. Dort wird mit einem Mikrorechner, entsprechend Baugruppe 6 in Fig. 5, die erforderliche Verzögerungszeit tv ermittelt und der Rahmensynchronisierimpuls verzögert.

Nachdem der Rahmensynchronisationsvorgang der vierten Teilanlage 4 mit der ersten Teilanlage 1 abgeschlossen ist, kann nunmehr die fünfte Teilanlage 5 mit der vierten Teilanlage 4 synchronisiert werden. Dieser Rahmensynchronisationsvorgang verläuft nach dem Verfahren wie es bei der Beschreibung der Fig. 1 bis 5 dargestellt ist.

## Patentansprüche

1. Verfahren zur Synchronisation von Impulsrahmen bei der digitalen Übertragung von Informationen von einer ersten Teilanlage zu einer zweiten Teilanlage in einer Telekommunikationsanlage, die aus einer Zusammenschaltung mehrerer, bedarfsweise örtlich voneinander abgesetzter, Teilanlagen besteht,
   **gekennzeichnet durch**
   folgende Verfahrensschritte:

   - In der ersten Teilanlage (1) wird eine erste Zeitdifferenz (Δt1) zwischen dem Rahmensynchronisierimpuls (FR1) der ersten Teilanlage (1) und dem von der zweiten Teilanlage (2) empfangenen Rahmensynchronisierimpuls (FR2) bestimmt und zur zweiten Teilanlage (2) übertragen,

   - in der zweiten Teilanlage (2) wird eine zweite Zeitdifferenz (Δt2) zwischen dem Rahmensynchronisierimpuls (FR2) der zweiten Teilanlage (2) und dem von der ersten Teilanlage (1) empfangenen Rahmensynchronisierimpuls (FR1) bestimmt, aus der Summe der ersten Zeitdifferenz (Δt1) und der zweiten Zeitdifferenz (Δt2) wird die Signallaufzeit (ΔT) zwischen der ersten Teilanlage (1) und der zweiten Teilanlage (2) bestimmt, und anschließend wird der Rahmensynchronisierimpuls (FR2) der zweiten Teilanlage (2) um eine Zeit (tv) verzögert, die gleich ist der Differenz aus der ersten Zeitdifferenz (Δt1) und der Signallaufzeit (ΔT).

2. Verfahren nach Anspruch 1,
   dadurch gekennzeichnet, daß bei einer Telekommunikationsanlage, die aus der Zusammenschaltung aus einer Vielzahl von Teilanlagen besteht, ausgehend von einer Masterteilanlage gemäß dem strukturellen Aufbau der Telekommunikationsanlage die Bestimmung der Verzögerungszeit jeweils schrittweise von Teilanlage zu Teilanlage erfolgt.

3. Schaltungsanordnung zur Durchführung des Verfahrens gemäß Anspruch 1,
dadurch gekennzeichnet, daß zur Bestimmung der Zeitdifferenz zwischen dem eigenen Rahmensynchronisierimpuls der ersten Teilanlage und dem empfangenen Rahmensynchronisierimpuls der zweiten Teilanlage an den Eingang eines sogenannten Frame Aligners (8), der die Zuordnungen zwischen digitalen Informationen und Takten organisiert, der empfangene Takt (CL) gelegt wird und daß der Ausgang (RFR) des Frame Aligners (8), an dem der empfangene Rahmensynchronisierimpuls bereitgestellt wird, mit einem ersten Eingang einer Vergleichsschaltung (9) und daß die Leitung, die den eigenen Rahmensynchronisierimpuls (FR) bereitstellt, mit einem zweiten Eingang der Vergleichsschaltung (9) verbunden ist, deren Ausgang an einen Mikrorechner (6) geschaltet ist, der seinerseits mit einer Verzögerungsschaltung (13) verbunden ist.

Fig.1

Fig.2

Fig.3

7

Fig.4

Fig.5

Fig. 6